# EUROPÄISCHE PATENTSCHRIFT

(11) **EP 1 324 896 B1**
(45) Veröffentlichungstag und Bekanntmachung des Hinweises auf die Patenterteilung: **22.11.2006**
(21) Anmeldenummer: 01962947.6
(22) Anmeldetag: 16.08.2001
(51) Int. Cl.: B60N 2/08

(54) **SITZLÄNGSVERSTELLUNG**
LONGITUDINAL SEAT ADJUSTMENT SYSTEM
SYSTEME DE REGLAGE LONGITUDINAL DE SIEGE

(30) Priorität: 13.10.2000 DE 10050959
(43) Veröffentlichungstag der Anmeldung: 09.07.2003
(73) Patentinhaber: KEIPER GmbH & Co. KG, 67657 Kaiserslautern (DE)
(72) Erfinder: FLICK, Joachim, 42499 Hückeswagen (DE); BORBE, Michael, 53359 Rheinbach (DE); GROSS, Bernd, 40764 Langenfeld (DE); KLAHOLD, Wolfgang, 44652 Herne (DE)
(74) Vertreter: Ludewig, Karlheinrich
(86) Internationale Anmeldenummer: PCT/EP2001/009417
(87) Internationale Veröffentlichungsnummer: WO 2002/032717

(56) Entgegenhaltungen:
- EP-A- 0 842 808
- DE-A- 3 042 379
- DE-A- 19 709 149
- FR-A- 2 759 330
- US-A- 3 631 740

## Beschreibung

Die Erfindung betrifft eine Sitzlängsverstellung, insbesondere für Fahrzeugsitze, mit zwei im Abstand voneinander angeordneten Schienenpaaren, die jeweils aus zwei U-förmigen Schienen, einer dem Sitz zugewandten Oberschiene und einer dem Boden eines Fahrzeuges zugewandten Unterschiene aufgebaut sind, mit an den Schenkeln der beiden Schienen angeformten, in ihrer Längsrichtung verlaufenden U-förmigen Abschnitten, die bei der Unterschiene in den Innenraum der Schiene liegen und die bei der Oberschiene außerhalb der U-förmigen Schiene liegen und mit wenigstens einem federbelasteten, bewegbaren, plattenförmigen Verriegelungsteil, der an der Oberschiene gehaltert ist und in einer Verriegelungsstellung eine Bewegung der Oberschiene zu der Unterschiene sperrt und wobei beim Auftreten einer starken Belastung eine gezielte Deformation der Unter- und/oder Oberschiene stattfindet. Hierbei ist die U-förmige Unterschiene am freien Rand ihres U-förmigen Abschnittes mit zahnartigen Durchbrüchen ausgestattet, während die U-förmige Oberschiene an ihrem Schenkel mit dem U-förmigen Abschnitt schlitzartige Öffnungen trägt, in die Zähne des Verriegelungsteiles eingreifen, wobei über ein Bedienungsglied der Verriegelungsteil gegen die Kraft einer Feder von einer Verriegelungsstellung in eine Freigabestellung überführbar ist.

Die FR-A-2 759 330 zeigt eine Sitzlängsverstellung für Fahrzeugsitze mit einem Schienenpaar, von denen eine Schiene fest am Boden des Fahrzeugs befestigt wird und die zweite Schiene relativ zur ersten Schiene beweglich ist und mit dem Fahrzeugsitz verbunden ist. Darüber hinaus verfügt das Schienenpaar noch über Verriegelungseinrichtungen, die die Relativbewegung der beiden Schienen zueinander verhindern sollen und die Zähne aufweisen, die sowohl in Ausschnitte an der beweglichen Schiene als auch in eine Verriegelungskrampenreihe an der festen Schiene eingreifen. Bei einem crashartigen Aufprall des Fahrzeuges verformen sich die Zähne und verbiegen sich derart, dass der Fahrzeugsitz nicht mehr entriegelt werden kann. Nachteilig bei dieser Anordnung ist jedoch, dass bei einem besonders starken Aufprall die Zähne durch die große Belastung so weit deformiert werden, dass sie zerstört werden und abreißen. In diesem Fall ist eine sichere Halterung des Fahrzeugsitzes nicht mehr gewährleistet. Auch wenn mehrere Riegel vorgesehen sind, die als Differenzialriegel ausgestaltet werden, ist es gemäß dem Vorschlag der Druckschrift nicht vorgesehen, dass mehrere Riegel gleichzeitig in die Krampenreihe eingreifen. Somit kommt es im Falle des Abreißens der Zähne eines Riegels bei einer besonders starken Belastung zu einer ruckartigen Bewegung, bevor die Zähne eines anderen Riegels in die Krampenreihe eingreifen.

Ähnliche Sitzlängsverstellungen sind in der am 24.08.2000 angemeldeten, nach veröffentlichten DE-C-100 41 605 beschrieben. Solche Sitzlängsverstellungen sollen verbessert werden.

Aufgabe der Erfindung ist es, eine Sitzlängsverstellung der eingangs genannten Art so zu gestalten, dass die Spitzen der schlagartigen Belastung abgebaut werden, um so die auf dem Sitz befindliche Person zu schützen. Darüber hinaus soll die Anordnung möglichst einfach gebaut sein.

Die Aufgabe wird erfindungsgemäß dadurch gelöst, dass wenigstens zwei Verriegelungsplatten in ihrer Verriegelungsstellung gleichzeitig in lastaufnehmenden Kraftfluss in der Oberschiene liegen, dass die Randbereiche der zahnartigen Durchbrüche der Unterschiene und/oder die Randbereiche der schlitzartigen Öffnungen der Oberschiene plastifizierbar, also bleibend deformierbar gestaltet sind. Hierbei verformen die in die Öffnungen und Durchbrüche angreifenden Zähne des Verriegelungsteiles in seiner Verriegelungsstellung bei Auftreten einer großen schlagartigen Belastung die Randbereiche, in einer Weise, dass durch die Plastifizierung sich die Berührwinkel der Platten mit den Randbereichen kaum ändern.

Dadurch, dass die Randbereiche deformierbar bzw. plastifizierbar ausgestaltet sind, werden übergroße Belastungsspitzen abgebaut. Trotzdem ist das Schienenpaar bzw. der Kraftfahrzeugsitz sicher gehaltert. Empfehlenswerterweise erfolgt die gezielte Deformation der Randbereiche durch eine Lochung der die Durchbrüche und/oder Öffnungen aufweisenden Schenkelwände der Schiene. Hierdurch erhält man zum einen trotz der Lochung eine ausreichend feste Schiene, während die Lochung bewirkt, dass die Randbereiche so weit nachgeben können, dass Belastungsspitzen abgebaut werden und außerdem weitere Verriegelungsteile in den Kraftfluß gelangen. Die Montage wird durch eine solche Ausbildung nicht verteuert.

Bei der Erfindung liegen wenigstens zwei Verriegelungsplatten in ihrer Verriegelungsstellung gleichzeitig in einem lastaufnehmenden Kraftfluss in der Oberschiene, so dass durch die Plastifizierung bei einer schlagartig starken Belastung sich die Berührwinkel der Platten mit den Randbereichen kaum ändern. Diese Anordnung gestattet, dass bei Plastifizierung die Platten selber in ihrer Lage verbleiben und nicht mitbewegt werden, obwohl die Randbereiche der Öffnungen, in die die Zähne der Verriegelungsteile eingreifen, der Oberschiene verformbar sind. Die Verriegelungsplatten können den Sitz in seiner Sperrstellung haltern. Dadurch, dass der Berührwinkel sich nicht bzw. nur kaum ändert, ist auch nicht die Gefahr gegeben, dass einzelne Platten oder die weiteren Platten außer Eingriff kommen.

Bei einem besonderen Ausführungsbeispiel der Erfindung ist beiderseits einer schlitzförmigen Öffnung bzw. eines Durchbruches in der Schiene jeweils ein Aufnahmeraum vorgesehen, in den verformte Randbereiche eindringen können. Diese Maßnahme erlaubt, dass bei Verformung eine größere Verformungsstrecke gebildet wird, so dass trotz sicherer Halterung des Sitzes weiterhin Belastungsspitzen abgebaut werden können.

Je nach Ausbildung können die Aufnahmeräume als Langloch gestaltet sein oder stundenglasförmig. Bei einem anderen Ausführungsbeispiel weisen sie wenigstens einen Quersteg auf, um zwei benachbarten Randbereichen in dem Aufnahmeraum Unterstützung zu geben, wodurch eine bessere Kraftübertragung und Kraftaufnahme geschieht. Bei einem weiteren Ausführungsbeispiel ist der Aufnahmeraum durch einen Diagonalsteg unterteilt. Dieser Diagonalsteg erlaubt wiederum eine sichere Aufnahme der deformierten Bereiche. Der Plastifizierungsbereich kann auch mindestens ein separater Bauteil aus unterschiedlichem Material sein.

Der Verriegelungsteil ist bei einem besonderen Ausführungsbeispiel in wenigstens drei einzelne Platten unterteilt, die jeweils, an zwei gegenüberliegenden Seiten, mit Verriegelungszähnen ausgestattet sind. Die einzelnen Verriegelungsplatten erlauben eine sichere Festlegung der Verriegelungsstellung, darüber hinaus eine sichere Kraftableitung bei auftretenden Belastungen.

Bei einem weiteren Ausführungsbeispiel der Erfindung ist die Breite des zahnartigen Durchbruches der Unterschiene breiter als die Breite der schlitzartigen Öffnungen der Oberschiene. Ist der Verriegelungsteil in wenigstens drei getrennt voneinander bewegbaren Plattenteilen unterteilt, stehen in der Verriegelungsstellung wenigstens zwei Plattenteile mit ihren Zähnen in Eingriff mit den Durchbrüchen und Öffnungen der Schiene, hierbei entspricht die Breite der schlitzartigen Öffnung der Oberschiene der Zahnbreite des Zahnes der Verriegelungsplatte.

Durch diese Maßnahme erhält man eine nahezu stufenlose Einstellung von Oberschiene zur Unterschiene. Darüber hinaus wird gewährleistet, dass wenigstens zwei Platten in der Verriegelungsstellung in Eingriff mit der Unterschiene stehen. Crashartige Belastungen können gut abgefangen werden.

Auf der Zeichnung ist der Erfindungsgegenstand in mehreren Ausführungsbeispielen dargestellt und zwar zeigen:
- Fig. 1: in perspektivischer Darstellung ein Schienen-Paar der Sitzlängsverstellung,
- Fig. 2: einen Querschnitt durch das Schienen-Paar,
- Fig. 3: in perspektivischer Darstellung die Oberschiene im Schnitt,
- Fig.4: in perspektivischer Darstellung Unterschiene und Verriegelungsteil im Schnitt,
- Fig. 5: in perspektivischer Darstellung Oberschiene, Unterschiene und Verriegelungsteil im Schnitt,
- Fig. 6: in perspektivischer Darstellung Oberschiene, Unterschiene und Verriegelungsteil im Schnitt,
- Fig.7: in perspektivischer Darstellung Unterschiene und Verriegelungsteil nach einem Crashfall im Schnitt,
- Fig. 8 - 11: verschiedene Umrissformen eines Aufnahmeraumes.

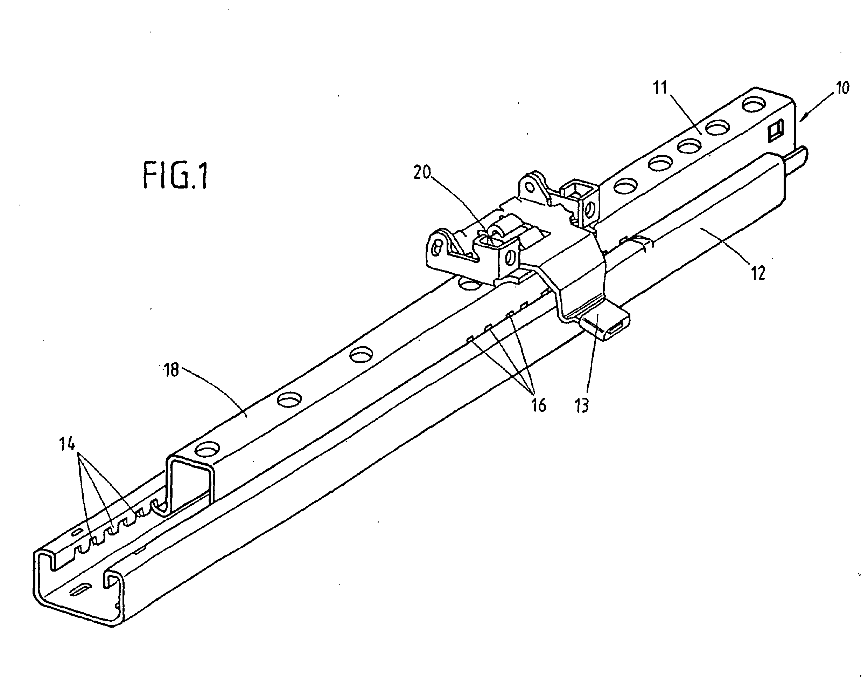

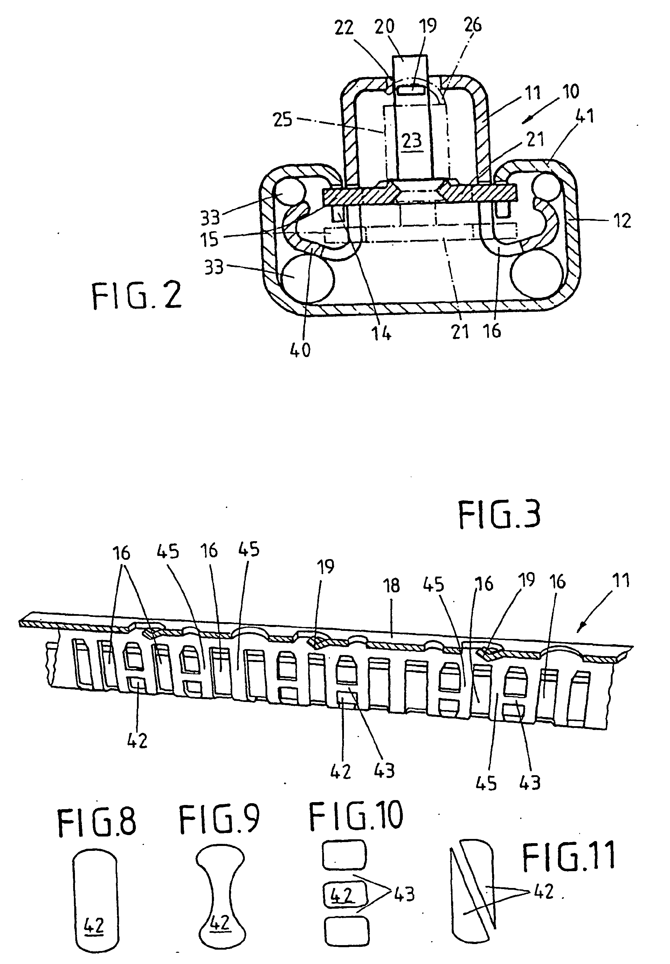

Die erfindungsgemäße Sitzverstellung besteht aus zwei im Abstand angeordneten Schienenpaaren 10, die jeweils aus einer Oberschiene 11 und einer Unterschiene 12 bestehen; hierbei ist die Oberschiene 11 über Kugeln 33 gegenüber der Unterschiene 12 verschiebbar. Die Unterschiene 12 ist am Boden eines Fahrzeuges befestigbar, während die Oberschiene 11 einem Sitzgestell zugeordnet wird. Das Profil von Oberschiene und Unterschiene 11, 12 ist U-förmig, wobei das freie Ende der Schenkel seinerseits nochmals abgebogen und verformt ist, derart, dass die Oberschiene eine zweite Abbiegung in Form eines U-förmigen Abschnittes 40 nach außen und nach oben hin offen aufweist, während die Unterschiene 12 eine zweite U-förmige Abbiegung 41 in Form eines U-förmigen Abschnittes 41 nach innen und unten zeigt. Diese beiden Abschnitte greifen ineinander, wie beispielsweise aus Fig. 1 und Fig. 2 zu erkennen ist. Um die Bewegung der beiden Schienen 11, 12 zueinander zu sperren und damit eine Sitzverschiebung zu verhindern, ist die Unterschiene mit zahnartigen Durchbrüchen 14 versehen. In diese Durchbrüche 14 greifen Zähne 15 eines Verriegelungsteiles 21.

Zur Bewegung des Verriegelungsteiles 21 mit den zahnartigen Durchbrüchen sind an beiden Schenkeln der Oberschiene bis zur zweiten Abbiegung Schlitze 16 vorgesehen, in denen bereichsweise die Zähne 15 des Verriegelungsteiles eingreifen können.

Der Verriegelungsteil 21 ist mit einer Führung 23 versehen. Diese Führung greift durch eine Öffnung 22 am Mittelsteg 18 der U-förmigen Oberschiene 11 hindurch, so dass die Führung 23 mit einem Ende 20 bereichsweise aus dem Mittelsteg herausragt. An diesem hervorstehenden Ende 20 greift das Bedienungsglied 13 in bekannter Weise an.

In der Freigabestellung, also in der Stellung, in der die beiden Schienen 10, 11 und somit der Sitz gegenüber dem Fahrzeugboden bewegt werden kann, wird die Führung 23 bereichsweise ins Innere der Schiene 11 bewegt. Hierdurch gelangt der Verriegelungsteil 21 mit den Zähnen 15 außer Eingriff mit den zahnartigen Durchbrüchen 14 der Unterschiene 12. Bei den dargestellten Ausführungsbeispielen sind jeweils drei einzelne Platten 21 des Verriegelungsteiles 21 vorgesehen. Diese einzelnen Platten sind nach dem Nonius-Prinzip angeordnet, d.h., dass zur Sperrung der Bewegung der Oberschiene 11 zumindest eine Verriegelungsplatte 21 in die zahnartigen Durchbrüche 14 der Unterschiene eingreift. Es ergibt sich eine feinstufige Verstellmöglichkeit.

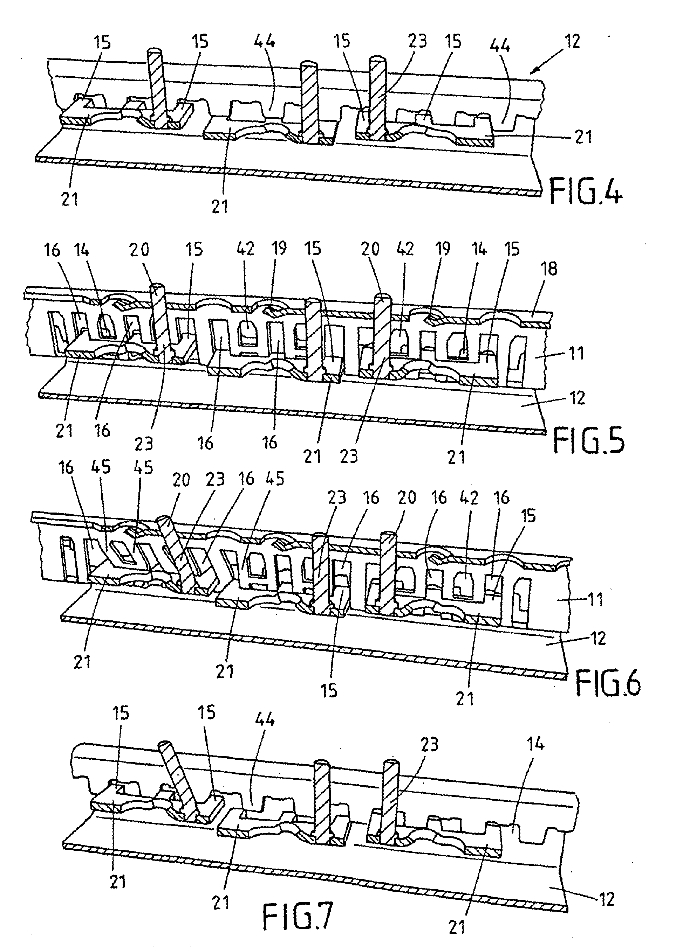

Die Breite der zahnartigen Durchbrüche ist jedoch üblicherweise so gestaltet, dass üblicherweise zwei Platten mit ihren Zähnen in Eingriff stehen, wie dies beispielsweise Fig. 4 zeigt.

Wie insbesondere aus Fig. 2 zu erkennen ist, weist die Oberschiene 11 eine nasenförmige Abbiegung 19 auf. In diese Abbiegung wird ein hakenförmiges Federende 26 einer Rückstellfeder 25 eingehängt. Es sei hier noch darauf hingewiesen, dass die Führung 23 bei dem gezeigten Ausführungsbeispiel stiftartig ausgebildet und an dem Verriegelungsteil bzw. der Verriegelungsplatte befestigt ist.

Nachzutragen bleibt noch, dass das zweite Ende der Feder 25, also das untere Ende der Feder, an der Verriegelungsplatte 21 befestigt ist. Hierdurch wird der Verriegelungsteil 21 immer gegen die Oberschiene gezogen, soweit nicht die Zahnstege zwischen den zahnartigen Durchbrüchen 14 dies verhindern.

Des Weiteren ist mitzuteilen, dass in der Darstellung von Fig. 2 der Verriegelungsteil 21 strichpunktiert in seiner Freigabestellung ist, d.h., die Zähne 15 greifen nicht mehr in die zahnartigen Durchbrüche 14. Die stiftartige Führung 23 ragt mit ihrem Ende 20 aus der Oberschiene heraus.

In Fig. 3 ist perspektivisch die Hälfte einer Oberschiene 11 dargestellt. Der Schnitt verläuft entlang des Mittelsteges 18. In dem Schenkel sind die Schlitzöffnungen 16 zu erkennen, die zur Führung der Zähne des Verriegelungsteils dienen und zum anderen die Bewegung der Oberschiene blockieren sollen, wenn die Zähne des Verriegelungsteiles in die zahnartigen Durchbrüche 14 der Unterschiene 12 eingreifen. Im Mittelsteg 18 ist eine nasenförmige Abbiegung 19 vorgesehen, die zur Festlegung des einen Endes der Feder 25 dient, zum anderen sind Öffnungen 22 eingezeichnet, durch die die stiftartige Führung 23 hindurchragt.

Die schlitzartigen Öffnungen 16 weisen jeweils zwischen sich eine Aufnahme 42 auf. Die Aufnahme 42 ist mit einem Quersteg 43 unterteilt, dessen Bedeutung noch beschrieben wird.

In Fig. 4 ist eine halbierte Unterschiene 12 dargestellt. Außerdem die drei plattenförmigen Teile des Verriegelungsgliedes 21. Die Zähne 15 des Verriegelungsteiles 21 greifen in die zahnartigen Durchbrüche 14 der Schenkel der Unterschiene. Außerdem trägt die Verriegelungsplatte 21 die Führung 23.

Wie aus der Zeichnung ersichtlich ist, sind von den drei Verriegelungsplatten zwei in Eingriff mit den zahnartigen Durchbrüchen, während die mittlere Verriegelungsplatte unterhalb der Durchbrüche vorgesehen ist. Die linke Verriegelungsplatte liegt an dem linken Rand des zahnartigen Durchbruches 14, während die äußerst rechte Verriegelungsplatte an der rechten Seite des zahnartigen Durchbruches anliegt.

Wird dieser um eine halbe Zahnbreite verschoben, so würden beispielsweise der erste und der zweite Verriegelungsteil mit den Zähnen in die Durchbrüche 14 eingreifen.

In Fig. 5 ist nun im Längsschnitt und perspektivischer Darstellung der Zusammenbau von Unter- und Oberschiene dargestellt. Hierbei hat allerdings die Unterschiene mit den Verriegelungsplatten die gleiche Anordnung wie in Fig. 4 und mit den zahnartigen Durchbrüchen in der Unterschiene. Die mittlere Verriegelungsplatte 21 greift zwar auch durch die schlitzartigen Öffnungen, sie liegt jedoch wie in Fig. 4 unterhalb der Durchbrüche. Es sei hier noch vorgetragen, dass die Feder zur Rückstellung einer jeden Platte nicht eingezeichnet wurde.

Bei dem Ausführungsbeispiel nach Fig. 6 ist die Verformung der Schiene bei einem Crashfall gezeigt. Es wird angenommen, dass ein großer Stoß von der rechten Seite erfolgt, d.h. der Fahrzeugsitz und damit die Schiene erhalten eine Beschleunigungskraft nach links.

Hierdurch bedingt, verschieben sich die Verriegelungsplatten 21 mit der Oberschiene 11 derart, dass die rechte Platte 21 mit den Zähnen an gegenüberliegende Randbereiche 44 des Durchbruches 14 der Unterschiene 12 anliegt, wie Fig. 7 zeigt. Das mittlere Verriegelungsteil liegt immer noch unter den Durchbrüchen.

Die linke Verriegelungsplatte 21 hat die schlitzartigen Öffnungen an der Oberschiene verformt. Zugleich ist auch der Führungsstift selber verbogen. Die ganze Kraft wurde von diesem Verriegelungsteil aufgenommen.

Da zwischen den schlitzartigen Öffnungen 16 Aufnahmen 42 vorgesehen sind, sind die Randbereiche 45 geschwächt und es kann eine Verformung auftreten. Eine Verformung tritt auch in dem Führungsstift 23 auf. Ansonsten ist die Schiene, insbesondere die Unterschiene 12, unverändert. Durch diese Verformung wird der Stoß, der auf den Sitz erfolgt ist, praktisch gedämpft, d.h. die Spitzenbelastung wird gemildert. Ein solcher Stoß könnte beispielsweise dann auftreten, wenn ein Fahrzeug auf ein anderes Fahrzeug auffährt. Der Sitz hat noch seine ursprüngliche Geschwindigkeit, wodurch dann, wie aus der Zeichnung ersichtlich ist, die Verformung der schlitzartigen Öffnungen des Oberteiles sich ergibt. Es sei hier noch weiter vorgetragen, dass die drei Verriegelungsplatten in Verbindung mit den Randbereichen der Öffnungen eine durchlaufende Kraftflusslinie bilden, was bedeutet, dass von jedem Randbereich Kräfte aufgenommen werden können, um so im Endeffekt die Halterung des Sitzes zu gewährleisten.

Nachzutragen bleibt auch hier, dass die Zähne der linken Verriegelungsplatte in ihrer Lage verbleiben. Lediglich durch die Kraft der Oberschiene 11 wird der Führungsstift 23 verbogen und die beiden übrigen Platten sind derart verschoben, dass die rechte Platte, wie schon erwähnt, in den zahnartigen Durchbruch 14 nach links geschoben ist, während die mittlere Platte nach wie vor unterhalb der Durchbrüche zu finden ist.

Der Abstand der Platten wird durch die Randbereiche 44, 45 konstant gehalten. Zum Abschluss sei noch vorgetragen, dass die Aufnahmen für die plastifizierten, also bleibend verformten Randbereiche, unterschiedlich gestaltet sein können.

Bei Fig. 8 ist der Durchbruch als Langlochaufnahme dargestellt. In Fig. 9 ist die Aufnahme an den beiden Längsseiten mit konkaven Einbuchtungen versehen. In Fig. 10 weist die Aufnahme zwei Querstege auf und in Fig. 11 einen Quersteg.

Wie bereits erwähnt, sind die dargestellten Ausführungen nur beispielsweise Verwirklichungen der Erfindung. Diese ist nicht darauf beschränkt. Vielmehr sind noch mancherlei Abänderungen und Anwendungen möglich. Statt der drei Verriegelungsplatten könnte das Verriegelungsteil auch aus vier einzelnen Platten bestehen. Darüber hinaus könnte statt der einzelnen großen Aufnahmen eine Vielzahl von Löchern zwischen den schlitzartigen Öffnungen vorgesehen sein. Wichtig ist, dass die Randbereiche einer Öffnung relativ stark bleiben und sich bleibend deformieren, wenn große Belastungen auftreten.

### Bezugszeichenliste:

- 10: Schienenpaar
- 11: Oberschiene
- 12: Unterschiene
- 13: Bedienungsglied
- 14: zahnartiger Durchbruch
- 15: Zähne von 21
- 16: schlitzartige Öffnung in 11

- 18: Mittelsteg von 11
- 19: nasenförmige Abbiegung an 11
- 20: freies Ende von 23
- 21: Verriegelungsteil
- 22: Öffnung in 18
- 23: Führungsstift

- 25: Rückstellfeder
- 26: hakenförmiges Federende

- 33: Kugel

- 40: U-förmiger Abschnitt an 11
- 41: U-förmiger Abschnitt an 12
- 42: Aufnahme zwischen 16
- 43: Quersteg in 42
- 44: Randbereich von 14
- 45: Randbereich von 16

## Patentansprüche

1. Sitzlängsverstellung, insbesondere für Fahrzeugsitze, mit zwei im Abstand voneinander angeordneten Schienenpaaren (10), die jeweils aus zwei U-förmigen Schienen, einer dem Sitz zugewandten Oberschiene (11) und einer dem Boden eines Fahrzeuges zugeordneten Unterschiene (12) aufgebaut sind, mit an den Schenkeln der beiden Schienen angeformten, in ihrer Längsrichtung verlaufenden U-förmigen Abschnitten (40, 41), die bei der Unterschiene in dem Innenraum der Schiene liegen und die bei der Oberschiene außerhalb der U-förmigen Schiene liegen und mit wenigstens einem bewegbaren plattenförmigen Verriegelungsteil (21), der an der Oberschiene (11) gehaltert ist und in einer Verriegelungsstellung eine Bewegung der Oberschiene (11) zu der Unterschiene (12) sperrt und wobei beim Auftreten einer starken Belastung eine gezielte Deformation der Unter- (12) und/oder Oberschiene (11) stattfindet; hierbei ist die U-förmige Unterschiene (12) am freien Rand ihres U-förmigen Abschnittes (41) mit zahnartigen Durchbrüchen (14) ausgestattet, während die U-förmige Oberschiene (11) an ihrem Schenkel mit dem U-förmigen Abschnitt (40) schlitzartige Öffnungen (16) trägt, in die Zähne (15) des Verriegelungsteiles (21) eingreifen, wobei über ein Betätigungsglied (13) der Verriegelungsteil (21) gegen die Kraft einer Feder (25) von einer Verriegelungsstellung in eine Freigabestellung überführbar ist,
**dadurch gekennzeichnet,**
**dass** wenigstens zwei Verriegelungsplatten (21) in ihrer Verriegelungsstellung gleichzeitig in lastaufnehmendem Kraftfluss in der Oberschiene (41) liegen, dass die Randbereiche (44) der zahnartigen Durchbrüche (14) und/oder die Randbereiche (45) der schlitzartigen Öffnungen (16) bleibend deformierbar gestaltet sind, hierbei verformen die in die Öffnungen (16) und Durchbrüche (14) eingreifenden Zähne (15) des Verriegelungsteiles (21) in ihrer Verriegelungsstellung bei Auftreten einer großen Belastung die Randbereiche (44, 45) in einer Weise, dass durch die Plastifizierung sich die Berührwinkel der Platten mit den Randbereichen (44, 45) kaum ändern.

2. Sitzlängsverstellung nach Anspruch 1, **dadurch gekennzeichnet, dass** zur bleibenden Deformierung der Randbereiche (44, 45) die die Durchbrüche (14) und/oder Öffnungen (16) aufweisenden Schenkelwände in ihrem Querschnitt geschwächt ausgebildet sind.

3. Sitzlängsverstellung nach Anspruch 1 oder 2, **dadurch gekennzeichnet, dass** beiderseits einer schlitzförmigen Öffnung (16) der Oberschiene (11) und/oder eines Durchbruches (14) der Unterschiene (12) ein Aufnahmeraum (42) vorgesehen ist, in den die plastifizierten Randbereiche (45) der Öffnung (16) eindringen.

4. Sitzlängsverstellung nach Anspruch 3, **dadurch gekennzeichnet, dass** der Aufnahmeraum (42) als Langloch gestaltet ist.

5. Sitzlängsverstellung nach Anspruch 3, **dadurch gekennzeichnet, dass** der Aufnahmeraum (42) stundenglasförmig gestaltet ist.

6. Sitzlängsverstellung nach Anspruch 3, **dadurch gekennzeichnet, dass** der Aufnahmeraum (42) durch wenigstens einen Quersteg (43) unterteilt ist.

7. Sitzlängsverstellung nach Anspruch 3, **dadurch gekennzeichnet, dass** der Aufnahmeraum (42) durch einen Diagonalsteg unterteilt ist.

8. Sitzlängsverstellung nach einem der Ansprüche 1 bis 7, **dadurch gekennzeichnet, dass** der Verriegelungsteil (21) in wenigstens drei einzelne Verriegelungsplatten (21) unterteilt ist, die jeweils an zwei gegenüberliegenden Seiten mit den Verriegelungszähnen (15) ausgestattet sind.

9. Sitzlängsverstellung nach einem der Ansprüche 1 bis 8, **dadurch gekennzeichnet, dass** die Breite des zahnartigen Durchbruches (14) der Unterschiene (12) breiter ist als die Breite der schlitzartigen Öffnungen (16) der Oberschiene (11), dass der Verriegelungsteil (21) in wenigstens drei getrennt voneinander bewegbaren Plattenteilen (21) unterteilt ist, dass in der Verriegelungsstellung wenigstens zwei Plattenteile mit ihren Zähnen in Eingriff mit den Durchbrüchen und Öffnungen der Schienen (11, 12) stehen, hierbei ist die Breite der schlitzartigen Öffnung der Oberschiene (11) geringfügig größer als die Zahnbreite des Zahnes (15) der Verriegelungsplatte (21).

## Claims

1. Longitudinal seat adjustment system, particularly for vehicle seats, having two pairs of rails (10) spaced from one another which are made up in each case of two U-shaped rails, an upper rail (11) facing the seat and a lower rail (12) associated with the floor of a vehicle, with U-shaped sections (40, 41) formed on the sidepieces of the two rails, extending in the longitudinal direction thereof, which sections, in the case of the lower rail, lie within the interior space of the rail and, in the case of the upper rail, lie outside the U-shaped rail, and having at least one movable, plate-shaped locking member (21) which is supported on the upper rail (11) and when in the locking position prevents the upper rail (11) from moving relative to the lower rail (12), and wherein in the event of a substantial load occurring, controlled deformation of the lower rail (12) and/or upper rail (11) takes place; the U-shaped lower rail (12) is provided, at the free edge of its U-shaped section (41), with tooth-like slots (14), whereas the U-shaped upper rail (11) carries on its sidepiece with the U-shaped section (40), slit-like openings (16) in which the teeth (15) of the locking member (21) engage, while the locking member (21) can be moved counter to the force of a spring (25) from a locking position to a release position by means of an actuating element (13), **characterised in that** at least two locking plates (21) in their locking position are simultaneously located in a load-bearing flux of force in the upper rail (41), **in that** the edge regions (44) of the tooth-like slots (14) and/or the edge regions (45) of the slit-like openings (16) are designed to be permanently deformable; whereby the teeth (15) of the locking member (21) engaging in the openings (16) and slots (14), in their locking position, deform the edge regions (44, 45) when a heavy load is applied, such that the deformation scarcely affects the angles of contact between the plates and the edge regions (44, 45).

2. Longitudinal seat adjustment system according to claim 1, **characterised in that**, for the permanent deformation of the edge regions (44, 45), the cross-section of the sidepiece walls comprising the slots (14) and/or openings (16) is weakened.

3. Longitudinal seat adjustment system according to claim 1 or 2, **characterised in that** receiving spaces (42) are provided on both sides of a slit-like opening (16) in the upper rail (11) and/or a slot (14) in the lower rail (12), in which the deformed edge regions (45) of the opening (16) engage.

4. Longitudinal seat adjustment system according to claim 3, **characterised in that** the receiving spaces (42) are in the form of a slot.

5. Longitudinal seat adjustment system according to claim 3, **characterised in that** the receiving spaces (42) are hourglass-shaped.

6. Longitudinal seat adjustment system according to claim 3, **characterised in that** the receiving spaces (42) are subdivided by at least one transverse web (43).

7. Longitudinal seat adjustment system according to claim 3, **characterised in that** the receiving spaces (42) are subdivided by a diagonal web.

8. Longitudinal seat adjustment according to one of claims 1 to 7, **characterised in that** the locking member (21) is divided into at least three individual locking plates (21) each of which is provided with the locking teeth (15) on two opposite sides.

9. Longitudinal seat adjustment system according to one of claims 1 to 8, **characterised in that** the width of the tooth-like slot (14) in the lower rail (12) is greater than the width of the slit-like openings (16) in the upper rail (11), **in that** the locking member (21) is divided into at least three plate sections (21) which are movable separately from one another, **in that** in the locking position at least two plate sections engage with their teeth in the slots and openings in the rails (11, 12), the width of the slit-like opening in the upper rail (11) being slightly greater than the width of the tooth (15) of the locking plate (21).

## Revendications

1. Dispositif de réglage longitudinal de siège, en particulier pour des sièges de véhicule, avec deux paires de glissières (10) disposées à distance l'une de l'autre, composée chacune de deux glissières en forme de U, d'une glissière supérieure (11) associée au siège et d'une glissière inférieure (12) associée au fond d'un véhicule, avec des tronçons en forme de U (40, 41) formés d'un seul tenant sur les branches des deux glissières et s'étendant dans leur direction longitudinale, tronçons qui, pour la glissière inférieure, sont situés dans l'espace intérieur de la glissière et qui, concernant la glissière supérieure, sont situés à l'extérieur de la glissière en forme de U et avec au moins une partie de verrouillage (21) se présentant sous forme de plaque mobile maintenue sur la glissière supérieure (11) et bloquant en une position de verrouillage un déplacement de la glissière supérieure (11) par rapport à la glissière inférieure (12), où, lors de la survenance d'une forte sollicitation, une déformation à dessein de la glissière inférieure (12) et/ou de la glissière supérieure (11) se produisant, ici la glissière inférieure (12) en forme de U étant équipée, sur son bord libre de son tronçon (41) en forme de U, de passages (14) du genre de dents, tandis que la glissière supérieure (11) en forme de U porte, sur sa branche ayant le tronçon (40) en forme de U, des ouvertures (16) du genre de dents, dans lesquelles des dents (15) de la partie de verrouillage (21) s'engagent, sachant que, par l'intermédiaire d'un organe d'actionnement (13), la partie de verrouillage (21) peut être passée, à l'encontre de la force d'un ressort (25), d'une position de verrouillage à une position de libération,
**caractérisé en ce que**
au moins deux plaques de verrouillage (21) sont situées, à leur position de verrouillage, simultanément en un flux de forces supportant une charge, dans la glissière supérieure (41), **en ce que** les zones de bordure (44) des passages (14) du genre de dents et/ou les zones de bordure (45) des ouvertures (16) du genre de dents sont conformées pour pouvoir subir une déformation permanente, ici, les dents (15), s'engageant dans les ouvertures (16) et les passages (14) de la partie de verrouillage (21), à leur position de verrouillage déforment, lors de la survenance d'une forte sollicitation, les zones de bordure (44, 45), de manière que, du fait de la plastification, les angles de contact des plaques avec les zones de bordure (44, 45) changent à peine.

2. Dispositif de réglage longitudinal de siège selon la revendication 1, **caractérisé en ce que**, pour obtenir une déformation permanente des zones de bordure (44, 45), les parois de branche, présentant les passages (14) et/ou les ouvertures (16) sont réalisées en ayant une section transversale affaiblie.

3. Dispositif de réglage longitudinal de siège selon la revendication 1 ou 2, **caractérisé en ce que**, des deux côtés d'une ouverture (16), en forme de fente, de la glissière supérieure (11) et/ou d'un passage (14) de la glissière inférieure (12), est prévu un espace de logement (42), dans lequel pénètrent les zones de bordures (45) plastifiées de l'ouverture (16).

4. Dispositif de réglage longitudinal de siège selon la revendication 3, **caractérisé en ce que** l'espace de logement (42) est conformé en trou oblong.

5. Dispositif de réglage longitudinal de siège selon la revendication 3, **caractérisé en ce que** l'espace de logement (42) est conformé en forme de sablier.

6. Dispositif de réglage longitudinal de siège selon la revendication 3, **caractérisé en ce que** l'espace de logement (42) est subdivisé par au moins une nervure transversale (43).

7. Dispositif de réglage longitudinal de siège selon la revendication 3, **caractérisé en ce que** l'espace de logement (42) est subdivisé par une nervure en diagonale.

8. Dispositif de réglage longitudinal de siège selon l'une des revendications 1 à 7, **caractérisé en ce que** la partie de verrouillage (21) est subdivisée en au moins trois plaques de verrouillage (21) individuelles, équipées chacune, sur deux côtés opposés, des dents de verrouillage (15).

9. Dispositif de réglage longitudinal de siège selon l'une des revendications 1 à 8, **caractérisé en ce que** la largeur du passage (14), du genre de dent, de la glissière inférieure (12) est supérieure à la largeur des ouvertures (16) du genre de fentes de la glissière supérieure (11), **en ce que** la partie de verrouillage (21) est subdivisée en au moins trois parties de plaque (21) déplaçables séparément les unes des autres, **en ce que**, dans la partie de verrouillage, au moins deux parties de plaque sont en prise, par leurs dents, avec les passages et les ouvertures des glissières (11, 12), ici, la largeur de l'ouverture, du genre d'une fente, de la glissière supérieure (11) étant légèrement supérieure à la largeur de denture de la dent (15) de la plaque de verrouillage (21).
